# FASCICULE DE BREVET EUROPEEN

(11) **EP 1 718 515 B1**
(45) Date de publication et mention de la délivrance du brevet: **10.10.2007**
(21) Numéro de dépôt: 05731112.8
(22) Date de dépôt: 23.02.2005
(51) Int. Cl.: B62D 29/00

(54) **PROCEDE DE FABRICATION D'UN PLANCHER DE VEHICULE COMPRENANT UNE COUCHE DE MATERIAU SYNTHETIQUE**
VERFAHREN ZUR HERSTELLUNG EINES EINE SYNTHETISCHE MATERIALSCHICHT UMFASSENDEN FAHRZEUGBODENS
METHOD FOR PRODUCING A VEHICLE FLOOR COMPRISING A SYNTHETIC LAYER OF MATERIAL

(30) Priorité: 23.02.2004 FR 0401765
(43) Date de publication de la demande: 08.11.2006
(73) Titulaire: Cadence Innovation, 27950 Saint Marcel (FR)
(72) Inventeur: RENAULT, Thierry, F-27200 Vernon (FR); BOUCHEZ, Emilie, F-27120 Le Plessis Hebert (FR); BOIVIN, Emmanuel, F-27200 Vernon (FR)
(74) Mandataire: Texier, Christian
(86) Numéro de dépôt international: PCT/FR2005/000419
(87) Numéro de publication internationale: WO 2005/082699

(56) Documents cités:
- EP-A- 0 433 903
- DE-A- 3 035 644
- DE-A- 19 608 127
- US-A1- 2003 134 090

## Description

L'invention concerne les planchers de véhicule automobile.

Les contraintes auxquelles doit répondre un plancher de véhicule sont aujourd'hui nombreuses :
- contraintes de process d'assemblage: le plancher doit tenir les températures du bain de cataphorèse (soit environ 200°C) pendant 30 minutes sans dégradation et en préservant la géométrie de la caisse ;
- contraintes statiques : le conducteur et les passagers doivent pouvoir se tenir debout sans déformer le plancher de manière trop importante ;
- contraintes vibroacoustiques : pendant le fonctionnement du véhicule, le plancher ne doit pas générer ni transmettre de bruits et de vibrations ;
- contraintes environnementales : dans toutes les conditions d'utilisation, aucune dégradation du plancher ne doit survenir, que ce soit en présence de pluie, de boue, de pierre, de fluide automobile, à l'égard de la température, du gel, etc ; et
- contraintes de sécurité : le plancher doit protéger les passagers à l'égard de l'extérieur, notamment maintenir les sièges en cas de crash frontal ou latéral et participer à la rigidité et à la préservation de l'espace de survie dans les mêmes circonstances.

Un plancher en acier est constitué de manière classique d'une ou plusieurs pièces en tôle d'acier fines relativement bas de gamme (d'environ 0,7 mm d'épaisseur) qui permettent de répondre à la majorité de ces contraintes. Cette pièce de base est ensuite renforcée localement par des pièces structurelles en acier ayant des épaisseurs et des limites élastiques supérieures. Ces pièces permettent de répondre aux contraintes liées aux normes de crash et sont notamment les traverses d'assise sur lesquelles sont fixés les sièges ainsi que le renfort de tunnel qui permet au tunnel de ne pas se déformer lors d'un crash frontal. Les pièces en acier précitées sont fabriquées par emboutissage et soudées entre elles pour constituer le plancher.

Le plancher est la base de la caisse en blanc sur laquelle est ensuite soudé le reste de la structure du véhicule (longerons avant et arrière, côtés de caisse, etc.). L'ensemble de la caisse en blanc une fois assemblé (opération de ferrage) passe ensuite en peinture. Cette étape consiste tout d'abord dans un traitement de la caisse par passage dans un bain de cataphorèse qui empêche l'oxydation des pièces en acier. L'ensemble de la caisse est ensuite étuvé à une température d'environ 200°C (variable selon les constructeurs) avant de passer dans les cabines de peinture. Après peinture, la caisse est envoyée dans la zone de montage pour assemblage de tous les composants et organes du véhicule.

Les normes à venir en matière d'automobile vont limiter la quantité d'émission de CO₂ contenu dans les gaz d'échappement des véhicules. Cette émission est liée à la consommation de carburant du véhicule et donc, d'une part à l'efficacité du moteur, d'autre part au poids du véhicule. L'allégement de la structure du véhicule devient donc un axe prioritaire.

Un but de l'invention est donc de fournir un plancher permettant de contribuer à cet allègement et répondant par ailleurs de façon satisfaisante aux contraintes précitées.

A cet effet, on prévoit selon l'invention un procédé de fabrication d'un plancher de véhicule, dans lequel on rapporte, sur au moins une base préalablement mise en forme et comprenant au moins une couche de matériau synthétique, au moins un élément de renfort préalablement mis en forme et comprenant une couche de matériau synthétique et une couche métallique assemblées l'une à l'autre.

Un exemple d'une technique antérieur est divulgué par le document DE 19608127.

Le procédé selon l'invention pourra présenter en outre au moins l'une quelconque des caractéristiques suivantes :
- la base comprend une couche de matériau alvéolaire ;
- on remplit au moins partiellement la couche de matériau alvéolaire avec un matériau particulaire ;
- la base comprend au moins une couche de matériau synthétique renforcé par des fibres ;
- la base comprend au moins deux couches de matériau synthétique disposées de part et d'autre d'une âme ;
- on relie les deux couches l'une à l'autre par des fibres ;
- on dispose un matériau particulaire entre les deux couches ;
- la couche synthétique du ou de chaque élément de renfort est renforcée par des fibres ;
- chaque couche synthétique ou au moins l'une des couches synthétiques fait partie des familles suivantes :
   - les polyamides,
   - les polyéthylènes téréphtalates ; et
   - les préimprégnés à matrice polyester ou vinylester ;
- l'élément de renfort est unique ;
- on rapporte au moins deux éléments de renfort sur la base ;
- le ou chaque élément de renfort comprend au moins :
   - une traverse d'assise ;
   - un tunnel;
   - un raidisseur interne de tunnel ; ou
   - un brancard ;
- le ou chaque élément de renfort comprend au moins une traverse d'assise et un tunnel ;
- les bases sont au nombre de deux au moins et on rapporte l'élément de renfort de façon qu'il soit en contact avec les bases ;
- on fabrique le ou chaque élément de renfort en disposant dans un moule un insert métallique et en injectant la matière synthétique dans le moule ;
- on soude le ou chaque élément de renfort à la ou chaque base ;
- on fabrique le plancher de sorte qu'un insert en métal émerge du plancher achevé ; et
- on fait subir au plancher au moins l'un des traitements suivants :
   - un bain de cataphorèse ; et
   - un étuvage à une température située entre 150 et 250°C.

D'autres caractéristiques et avantages de l'invention apparaîtront encore dans la description suivante d'un mode préféré de réalisation et de variantes donnés à titre d'exemples non limitatifs en référence aux dessins annexés sur lesquels:
- la figure 1 est une vue en perspective d'un plancher obtenu au moyen du procédé de l'invention ;
- la figure 2 est une vue en perspective montrant la structure de la base du plancher de la figure 1 ;
- la figure 3 est une vue locale en section d'un des renforts du plancher de la figure 1 ;
- les figures 4 et 5 sont deux vues en plan illustrant des planchers obtenus par des variantes de mise-en oeuvre du procédé de l'invention ; et
- les figures 6 à 8 illustrent trois autres variantes de mise en oeuvre.

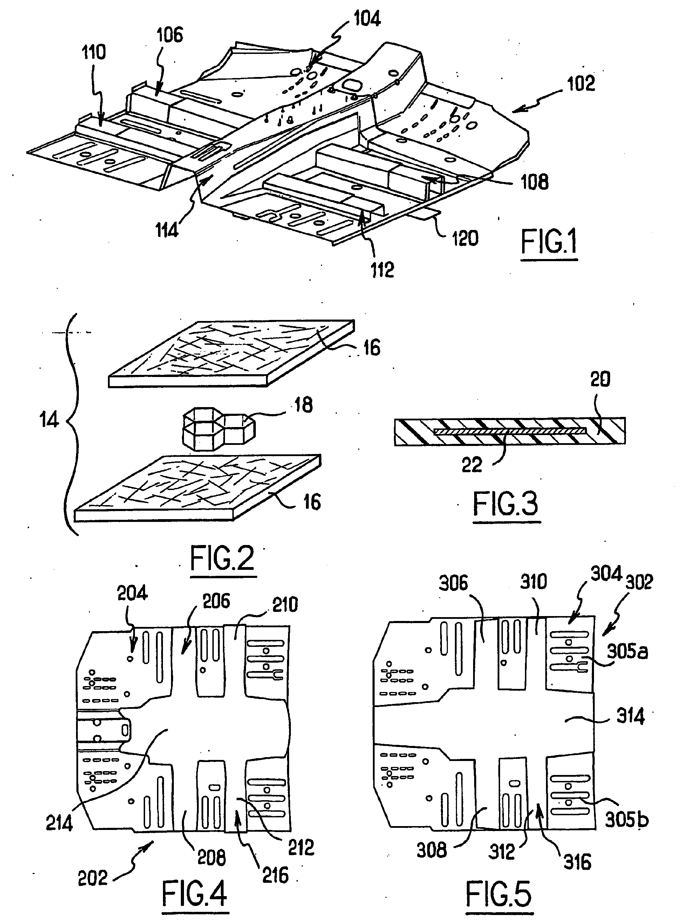

On va décrire en référence aux figures 1 à 3 un premier mode de mise en oeuvre du procédé de l'invention. Ce procédé vise à la fabrication d'un plancher 102 tel que celui illustré à la figure 1. Le plancher 102 comprend une base unique 104 et cinq renforts locaux 106, 108, 110, 112 et 114. Les quatre renforts 106, 108, 110 et 112 sont des renforts d'assise et le renfort 114 est un renfort de tunnel s'étendant dans le plan longitudinal médian du véhicule. Les quatre renforts 106, 108, 110 et 112 s'étendent symétriquement de part et d'autre du renfort 114 à partir de celui-ci, parallèlement les uns aux autres.

Avant l'assemblage de la base 104 avec les renforts, la base est mise en forme. Elle est réalisée dans un matériau sandwich. Il pourra par exemple s'agir d'un matériau connu sous la marque sandwiform constitué comme illustré à la figure 2 par un empilement 14 de deux peaux 16 en matériau thermoplastique renforcé par des fibres de verre et entre lesquelles s'étend une âme 18 en matériau alvéolaire tel qu'une mousse ou une structure en nids d'abeilles. Dans le présent exemple, la base 104 est en sandwiform polyamide ou polyéthylène téréphtalate (PET). Il est possible que l'âme 18 du sandwich (en nids d'abeilles ou en mousse) soit en polyamide et que les peaux 16 renforcées par des fibres de verre soient en PET. Alternativement, il est possible que les trois couches 16, 18, 16 soient en polyamide ou que les trois couches 16, 18, 16 soient en PET.

Chaque renfort 106, 108, 110, 112 et 114 est mis en forme avant assemblage à la base 104. Chacun d'eux comprend une couche de matériau synthétique 20 et une couche métallique 22 assemblées l'une à l'autre comme illustré à la figure 3. On observe sur cette figure que la couche métallique est en fait noyée dans la couche en matériau synthétique dans le présent exemple. Chacun de ces renforts est donc ici réalisé en technologie hybride, à savoir en un matériau composite renforcé par une pièce en métal. Le matériau composite 20 pourra être un matériau thermoplastique renforcé par des fibres de verre et le métal 22 pourra être de l'acier ou de l'aluminium.

Ces renforts sont dans le présent exemple réalisés en polyamide injecté. Pour cela, on insère dans le moule d'injection un insert métallique préalablement à l'injection. Différentes technologies peuvent être utilisées à cette fin. On pourra par exemple utiliser la technologie présentée dans le document US-5 190 803.

D'autres technologies possibles sont celles commercialisées par la société Rhodia. La première est intitulée « Assemblage Plastique Métal » (ou *Plastic Metal Assembling, PMA).* Elle met en oeuvre pour la matière plastique un matériau commercialisé sous la marque Technylstar comprenant du polyamide.

Une autre de ces technologies constitue un surmoulage de métal (ou *Metal Overmoulding, MOL).* Dans celle-ci, la pièce métallique 22 se trouve noyée dans la couche en matériau synthétique 20 comme illustré à la figure 3.

Enfin, on pourra également employer la technologie de moulage de métal par injection assistée par gaz ou eau *(Metal Gaz* /*Water Assisted Injection Moulding, GAIM).*

Pour fixer chaque renfort à la base, on pourra employer la soudure par vibration. D'autres types de soudure où d'assemblage peuvent néanmoins être prévus tels que la soudure électrique.

Dans le présent exemple, l'assemblage du plancher 102 ainsi constitué sur la caisse du véhicule est prévu avant cataphorèse. En d'autres termes, il est monté sur la caisse au ferrage. Cela veut dire que les matériaux utilisés passent ensuite dans le cycle de peinture et qu'ils doivent être capables en particulier d'être soumis aux températures de cataphorèse sans être endommagés et sans connaître de déformation qui mettrait en péril la géométrie de la caisse. C'est pour cette raison que les matériaux choisis précités sont de la famille des thermoplastiques polyamide ou PET ou encore des thermodurcissables de type SMC (*Sheet Moulding Compound*) à matrice polyester ou vinylester.

Plusieurs possibilités d'assemblage du plancher sur la caisse sont envisageables. On pourra par exemple coller le plancher 102 à la caisse ou encore réaliser une soudure métal sur métal (par exemple acier sur acier), ce qui nécessite au préalable le comoulage d'inserts 120 en acier dans le plancher 102, par exemple dans la base 104 lors du moulage de celle-ci.

Par conséquent, on pourra prévoir que, dans un premier cycle d'étapes de réalisation du véhicule, le plancher 102 tel qu'illustré à la figure 1 est constitué. C'est donc au cours de ce cycle que la base 104 reçoit les traverses en matériau hybride 106, 108, 110, 112 ainsi que la doublure de tunnel 114. Ce cycle d'étapes peut par exemple avoir lieu chez un fournisseur.

Dans un deuxième cycle d'étapes qui peut par exemple avoir lieu chez un constructeur, sont fixées au plancher 102 des pièces telles qu'un longeron intérieur, un module avant, un tablier inférieur et un module arrière, par exemple dans l'ordre dans lequel elles viennent d'être énumérées.

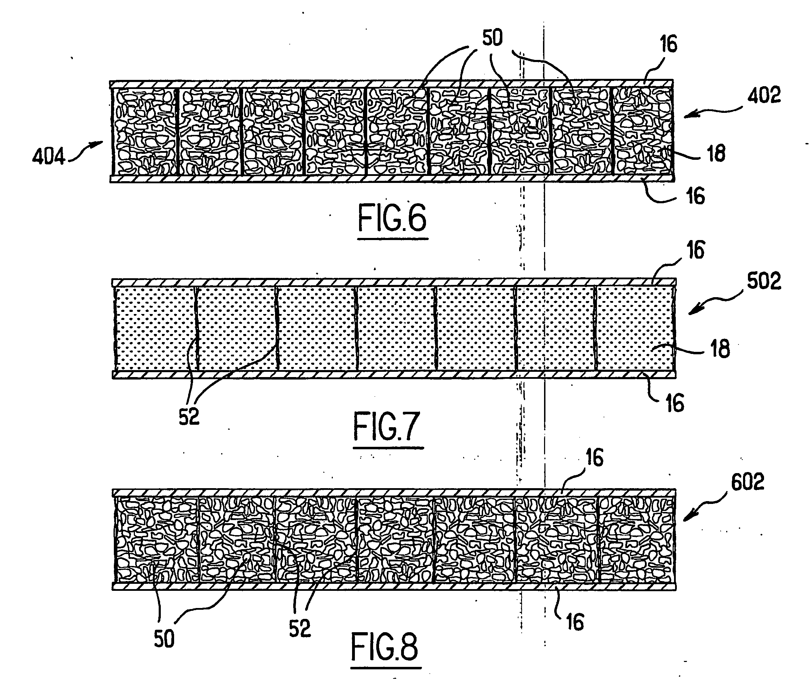

Des variantes de mise en oeuvre du procédé selon l'invention sont illustrées aux figures 4 et 5.

La figure 4 illustre le plancher 202 obtenu avec la première variante. Dans ce mode de mise en oeuvre, on fixe à la base 204 un unique renfort 216 constituant en une seule pièce l'ensemble des renforts précédemment considérés en relation avec la figure 1, à savoir les traverses 206, 208, 210 et 212 et le tunnel 214. Pour la mise en oeuvre de cette variante, on réalise au moyen d'une unique opération de moulage par injection sous la forme d'une pièce unique l'ensemble des cinq renforts qui constituent ainsi un renfort unique. Pour cela, on insère dans le moule préalablement à sa fermeture les cinq renforts métalliques destinés à être assemblés à la couche de matériau synthétique lors du moulage par injection.

La base 204 ayant précédemment par ailleurs été mise en forme au cours d'une opération indépendante, on fixe ensuite le renfort unique 216 à la base 204.

La figure 5 illustre un plancher 302 obtenu au moyen d'une deuxième variante du procédé de l'invention. Dans celle-ci, le tunnel et les quatre traverses sont à nouveau constitués sous la forme d'un renfort unique d'une seule pièce 316. En revanche, la base 304 est cette fois constituée au moyen de deux demi bases 305a et 305b correspondant respectivement aux parties gauche et droite de celle-ci. A cela s'ajoute dans le présent exemple que la base 304 est dépourvue de matière au droit du renfort de tunnel 314. Cette fois, on met en forme au cours d'une opération préalable chacune des deux parties 305a et 305b. Ensuite, on assemble le renfort unique 316 aux deux parties 305a et 305b avec lesquelles il est en contact. Les traverses 306 et 310 sont en contact avec la partie 305a et les traverses 308 et 312 sont en contact avec la partie 305b. Le tunnel 314 est en contact avec les deux demi-bases 305a, 305b.

Ces deux variantes permettent d'éviter le risque d'apparition de zones de fragilité, en particulier à la jonction des traverses et du tunnel, risque qui pouvait apparaître dans le mode de réalisation de la figure 1.

Le plancher selon l'invention présente un poids réduit et intègre dès sa réalisation nombre de pièces. On peut estimer que la réduction de masse par rapport à un plancher en acier est de 30%. De plus, le comportement du plancher en situation de crash se trouve amélioré.

Dans une autre variante, on pourra prévoir de monter le plancher sur la caisse du véhicule après cataphorèse. Dans ce cas, les matériaux choisis pour constituer le plancher n'auront pas besoin de pouvoir résister à des températures de 200°C. Le polypropylène par exemple pourra être utilisé. Néanmoins, les contraintes de conception de la caisse sont dans ce cas nombreuses car la caisse doit être suffisamment rigide en l'absence du plancher pour passer en cataphorèse sans se déformer. De plus, le montage est plus difficile car il faut pouvoir faire entrer le plancher dans la caisse déjà fermée. Le plancher pourrait par exemple entrer par l'avant de la caisse au niveau du pare-brise ou par l'arrière dans l'ouverture de hayon. Il peut également être envisagé de le faire entrer par une porte. Il sera avantageux dans ce cas de prévoir un plancher pliable ou en deux parties.

Une variante 402 du plancher selon l'invention et du procédé associé est illustrée à la figure 6. Cette fois, lors de la réalisation de la base 404, on déverse dans les alvéoles de la couche 18 une matière particulaire en vrac 50 formée par exemple de granules ou de copeaux, pour remplir au moins partiellement les alvéoles avec ce matériau. Cette matière en vrac modifie les propriétés acoustiques du plancher en réduisant la transmission des bruits vers l'intérieur de l'habitacle notamment.

Dans la variante 502 de la figure 7, une couche alvéolaire 18 est placée entre les deux couches 16 et ces deux couches 16 sont reliées l'une à l'autre par des fibres, telles que des fibres de verre 52, formant des pontages qui traversent ici chacun plusieurs fois l'épaisseur de chacune des couches en émergeant sur leurs faces externes respectives.

Enfin, dans la variante 602 de la figure 8, la couche intermédiaire est formée par un matériau particulaire 50 en vrac (granules ou copeaux par exemple) répandu entre les deux couches. On améliore ici encore les propriétés acoustiques. Les deux couches 16 sont là encore reliées par des fibres de verre 52 qui pontent les deux couches 16.

On pourra combiner cette variante avec celle de la figure 7.

On pourra mettre en oeuvre les caractéristiques précitées de ces trois dernières variantes indépendamment de la présence d'un élément de renfort.

Bien entendu, on pourra apporter à l'invention de nombreuses modifications sans sortir du cadre de celle-ci. On pourra prévoir que l'un quelconque des renforts comprend plus d'une couche de matériau synthétique et/ou plus d'une couche de matériau métallique. On pourra prévoir que l'un au moins des renforts constitue une doublure externe de tunnel, un raidisseur interne de tunnel et/ou un brancard.

## Revendications

1. Procédé de fabrication d'un plancher (102 ; 202 ; 302 ; 402 ; 502 ; 602) de véhicule, dans lequel on rapporte, sur au moins une base comprenant au moins une couche (16,18) de matériau synthétique, au moins un élément de renfort préalablement mis en forme et comprenant une couche de matériau synthétique (20) et une couche métallique (22) assemblées l'une à l'autre, **caractérisé en ce que** la base est préalablement mise en forme.

2. Procédé selon la revendication précédente, **caractérisé en ce que** la base (104; 204; 304; 404) comprend une couche (18) de matériau alvéolaire.

3. Procédé selon la revendication précédente, **caractérisé en ce qu'**on remplit au moins partiellement la couche de matériau alvéolaire (18) avec un matériau particulaire (50).

4. Procédé selon au moins l'une quelconque des revendications précédentes, **caractérisé en ce que** la base (104 ; 204 ; 304 ; 404 ; 504 ; 604) comprend au moins une couche de matériau synthétique (16) renforcé par des fibres.

5. Procédé selon au moins l'une quelconque des revendications précédentes, **caractérisé en ce que** la base (104 ; 204 ; 304 ; 404 ; 504 ; 604) comprend au moins deux couches (16) de matériau synthétique disposées de part et d'autre d'une âme (18).

6. Procédé selon la revendication précédente, **caractérisé en ce qu'**on relie les deux couches (16) l'une à l'autre par des fibres (52).

7. Procédé selon au moins l'une quelconque des revendications 5 ou 6, **caractérisé en ce qu'**on dispose un matériau particulaire (50) entre les deux couches (16).

8. Procédé selon au moins l'une quelconque des revendications précédentes, **caractérisé en ce que** la couche synthétique (20) du ou de chaque élément de renfort est renforcée par des fibres.

9. Procédé selon au moins l'une quelconque des revendications précédentes, **caractérisé en ce que** chaque couche synthétique (16,18,20) ou au moins l'une des couches synthétiques fait partie des familles suivantes :
- les polyamides,
- les polyéthylènes téréphtalates ; et
- les préimprégnés à matrice polyester ou vinylester.

10. Procédé selon au moins l'une quelconque des revendications précédentes, **caractérisé en ce que** l'élément de renfort (216 ; 316) est unique.

11. Procédé selon au moins l'une quelconque des revendications 1 à 9, **caractérisé en ce qu'**on rapporte au moins deux éléments de renfort (106,108,110,112,114) sur la base (104).

12. Procédé selon au moins l'une quelconque des revendications précédentes, **caractérisé en ce que** le ou chaque élément de renfort comprend au moins :
- une traverse d'assise ;
- un tunnel ;
- un raidisseur interne de tunnel ; ou
- un brancard.

13. Procédé selon au moins l'une quelconque des revendications précédentes, **caractérisé en ce que** le ou chaque élément de renfort (216 ; 316) comprend au moins une traverse d'assise et un tunnel.

14. Procédé selon au moins l'une quelconque des revendications précédentes, **caractérisé en ce que** les bases (305a,305b) sont au nombre de deux au moins et on rapporte l'élément de renfort (316) de façon qu'il soit en contact avec les bases.

15. Procédé selon au moins l'une quelconque des revendications précédentes, **caractérisé en ce qu'**on fabrique le ou chaque élément de renfort en disposant dans un moule un insert métallique (22) et en injectant la matière synthétique (20) dans le moule.

16. Procédé selon au moins l'une quelconque des revendications précédentes, **caractérisé en ce qu'**on soude le ou chaque élément de renfort à la ou chaque base.

17. Procédé selon au moins l'une quelconque des revendications précédentes, **caractérisé en ce qu'**on fabrique le plancher (102) de sorte qu'un insert (120) en métal émerge du plancher achevé.

18. Procédé selon au moins l'une quelconque des revendications précédentes, **caractérisé en ce qu'**on fait subir au plancher au moins l'un des traitements suivants :
- un bain de cataphorèse ; et
- un étuvage à une température située entre 150 et 250°C.

19. Plancher **caractérisé en ce qu'**il a été fabriqué par un procédé selon l'une quelconque des revendications précédentes.

## Claims

1. A method for manufacturing a floor (102; 202; 302; 402; 502; 602) of a vehicle, in which at least one reinforcing element previously formed and comprising a layer of synthetic material (20) and a metallic layer (22) joined to one another is joined to at least one base comprising at least one layer (16,18) of synthetic material, **characterised in that** the base is previously formed.

2. The process as claimed in the preceding Claim, **characterised in that** the base (104; 204; 304; 404) comprises a layer (18) of cellular material.

3. The process as claimed in the preceding Claim, **characterised in that** the layer of cellular material (18) is filled at least partially with a particular material (50).

4. The process as claimed in at least one of the preceding claims, **characterised in that** the base (104; 204; 304; 404; 504; 604) comprises at least one layer of synthetic material (16) reinforced by fibres.

5. The process as claimed in at least one of the preceding claims, **characterised in that** the base (104; 204; 304; 404; 504; 604) comprises at least two layers (16) of synthetic material arranged on either side of a core (18).

6. The process as claimed in the preceding Claim, **characterised in that** the two layers (16) are joined together by fibres (52).

7. The process as claimed in at least one of Claims 5 or 6, **characterised in that** a particular material (50) is placed between the two layers (16).

8. The process as claimed in at least one of the preceding claims, **characterised in that** the synthetic layer (20) of the or of each reinforcing element is reinforced by fibres.

9. The process as claimed in at least one of the preceding claims, **characterised in that** each synthetic layer (16,18, 20) or at least one of the synthetic layers is part of the following families:
- polyamides,
- terephtalate polyethylenes; and
- pre-impregnated by a polyester or vinyl ester matrix.

10. The process as claimed in at least one of the preceding claims, **characterised in that** the reinforcing element (216; 316) is unique.

11. The process as claimed in at least one of Claims 1 to 9, **characterised in that** at least two reinforcing elements (106,108, 110,112, 114) are joined to the base (104).

12. The process as claimed in at least one of the preceding claims, **characterised in that** the or each reinforcing element comprises at least :
- a layer beam;
- a tunnel;
- internal tunnel stiffening, or
- a longeron.

13. The process as claimed in at least one of the preceding claims, **characterised in that** the or each reinforcing element (216; 316) comprises at least one layer beam and a tunnel.

14. The process as claimed in at least one of the preceding claims, **characterised in that** there are at least two bases (305a, 305b) and the reinforcing element (316) is joined such that it is in contact with the bases.

15. The process as claimed in at least one of the preceding claims, **characterised in that** the or each reinforcing element is made by arranging a metallic insert (22) in a mould and by injecting the synthetic material (20) into the mould.

16. The process as claimed in at least one of the preceding claims, **characterised in that** the or each reinforcing element is welded to the or each base.

17. The process as claimed in at least one of the preceding claims, **characterised in that** the floor (102) is made such that a metal insert (120) emerges from the finished floor.

18. The process as claimed in at least one of the preceding claims, **characterised in that** the floor is subjected to at least one of the following treatments:
- a cataphoresis bath; and
- curing at a temperature between 150 and 250°C.

19. A floor, **characterised in that** it has been manufactured by a process as claimed in any one of the preceding claims.

## Patentansprüche

1. Verfahren zur Herstellung eines Fahrzeugbodens (102; 202; 302; 402; 502; 602), bei dem auf wenigstens ein Basisteil, das wenigstens eine Schicht (16, 18) aus Kunststoffmaterial umfaßt, wenigstens ein Verstärkungselement aufgesetzt wird, das zuvor geformt wurde und das eine Schicht aus Kunststoffmaterial (20) und eine metallische Schicht (22) umfaßt, die miteinander zusammengesetzt werden, **dadurch gekennzeichnet, daß** das Basisteil zuvor geformt wurde.

2. Verfahren nach dem vorhergehenden Anspruch, **dadurch gekennzeichnet, daß** das Basisteil (104; 204; 304; 404) eine Schicht (18) aus Zellstrukturmaterial umfaßt.

3. Verfahren nach dem vorhergehenden Anspruch, **dadurch gekennzeichnet, daß** die Schicht (18) aus Zellstrukturmaterial wenigstens teilweise mit einem körnigen Material (50) gefüllt wird.

4. Verfahren nach wenigstens einem der vorhergehenden Ansprüche, **dadurch gekennzeichnet, daß** das Basisteil (104; 204; 304; 404; 504; 604) wenigstens eine Schicht aus Kunststoffmaterial (16) umfaßt, das durch Fasern verstärkt ist.

5. Verfahren nach wenigstens einem der vorhergehenden Ansprüche, **dadurch gekennzeichnet, daß** das Basisteil (104; 204; 304; 404; 504; 604) wenigstens zwei Schichten (16) aus Kunststoffmaterial umfaßt, die auf beiden Seiten von einem Kern (18) angeordnet sind.

6. Verfahren nach dem vorhergehenden Anspruch, **dadurch gekennzeichnet, daß** die beiden Schichten (16) durch Fasern (52) miteinander verbunden sind.

7. Verfahren nach wenigstens einem der Ansprüche 5 oder 6, **dadurch gekennzeichnet, daß** zwischen den beiden Schichten (16) ein körniges Material (50) angeordnet wird.

8. Verfahren nach wenigstens einem der vorhergehenden Ansprüche, **dadurch gekennzeichnet, daß** die Kunststoffschicht (20) des oder jedes Verstärkungselements durch Fasern verstärkt wird.

9. Verfahren nach wenigstens einem der vorhergehenden Ansprüche, **dadurch gekennzeichnet, daß** jede Kunststoffschicht (16, 18, 20) oder wenigstens einer der Kunststoffschichten zu einer der folgenden Klassen gehört:
- den Polyamiden,
- den Polyethylen-Terephtalaten; und
- den vorimprägnierten Stoffen auf der Basis von Vinylester- oder Polyestermatrizen.

10. Verfahren nach wenigstens einem der vorhergehenden Ansprüche, **dadurch gekennzeichnet, daß** das Verstärkungselement (216; 316) ein einziges ist.

11. Verfahren nach wenigstens einem der Ansprüche 1 bis 9, **dadurch gekennzeichnet, daß** auf das Basisteil (104) wenigstens zwei Verstärkungselemente (106, 108, 110, 112, 114) aufgesetzt werden.

12. Verfahren nach wenigstens einem der vorhergehenden Ansprüche, **dadurch gekennzeichnet, daß** das oder jedes Verstärkungselement wenigstens folgendes umfaßt:
- einen Querträger für die Sitze;
- einen Tunnel;
- ein internes Versteifungselement des Tunnels; oder
- einen Bodenlängsträger.

13. Verfahren nach wenigstens einem der vorhergehenden Ansprüche, **dadurch gekennzeichnet, daß** das oder jedes Verstärkungselement (216; 316) wenigstens einen Querträger für die Sitze und einen Tunnel umfaßt.

14. Verfahren nach wenigstens einem der vorhergehenden Ansprüche, **dadurch gekennzeichnet, daß** die Basisteile (305a, 305b) wenigstens in einer Anzahl von zwei vorliegen und das Verstärkungselement (316) so aufgesetzt wird, daß es mit den Basisteilen in Kontakt ist.

15. Verfahren nach wenigstens einem der vorhergehenden Ansprüche, **dadurch gekennzeichnet, daß** das oder jedes Verstärkungselement hergestellt wird, indem in einer Gußform ein metallisches Einsatzteil (22) angeordnet wird und indem das Kunststoffmaterial (20) in die Gußform zugeführt wird.

16. Verfahren nach wenigstens einem der vorhergehenden Ansprüche, **dadurch gekennzeichnet, daß** das oder jedes Verstärkungselement auf das oder jedes Basisteil geschweißt wird.

17. Verfahren nach wenigstens einem der vorhergehenden Ansprüche, **dadurch gekennzeichnet, daß** der Boden (102) so hergestellt wird, daß ein Einsatzteil (120) aus Metall aus dem fertigen Boden hervorsteht.

18. Verfahren nach wenigstens einem der vorhergehenden Ansprüche, **dadurch gekennzeichnet, daß** der Boden wenigstens eine der folgenden Behandlungen erfährt:
- ein Kataphoresebad; und
- eine Ofenbehandlung bei einer Temperatur zwischen 150 und 250°C.

19. Boden, **dadurch gekennzeichnet, daß** er durch ein Verfahren nach einem der vorhergehenden Ansprüche hergestellt ist.
